# EUROPÄISCHE PATENTSCHRIFT

(11) **EP 0 560 112 B1**
(45) Veröffentlichungstag und Bekanntmachung des Hinweises auf die Patenterteilung: **15.05.1996**
(21) Anmeldenummer: 93102791.6
(22) Anmeldetag: 23.02.1993
(51) Int. Cl.: B65G 57/00, B65G 61/00

(54) **Vorrichtung zum Zuführen von Zwischenlagen zu einem Stapel**
Device for feeding intermediate layers to a stack
Dispositif pour amener des couches intercalaires à une pile

(30) Priorität: 12.03.1992 DE 4207808
(43) Veröffentlichungstag der Anmeldung: 15.09.1993
(73) Patentinhaber: Focke & Co. (GmbH & Co.), D-27283 Verden (DE)
(72) Erfinder: Focke, Heinz, W-2810 Verden (DE); Holloch, Johannes, W-2815 Langwedel (DE)
(74) Vertreter: Bolte, Erich, Dipl.-Ing.

(56) Entgegenhaltungen:
- DE-A- 2 605 197
- DE-A- 3 303 307
- DE-A- 3 627 577
- DE-A- 3 720 933
- US-A- 4 944 503

## Beschreibung

Die Erfindung betrifft eine Vorrichtung zum Herstellen von dünnen Zwischenlagen durch Abtrennen eines Zuschnitts von einer Materialbahn und Zuführen desselben zu einer Palette bzw. einem auf dieser gebildeten (Teil-)Stapel von Kartons oder anderen Gegenständen sowie zum Ablegen des Zuschnitts als Zwischenlage auf einer Kartonlage mit folgenden Merkmalen:
a) zum Beladen der Palette ist ein Palettierer vorgesehen,
b) zum Abziehen eines Abschnitts der Materialbahn von einer Bobine und zum Zuführen eines abgetrennten Zuschnitts und Ablegen auf dem (Teil-)Stapel als Zwischenlage ist ein Zwischenlagen-Aggregat vorgesehen,
c) das Zwischenlagen-Aggregat weist einen Bahnförderer zum Transport eines dem Zuschnitt entsprechenden Abschnitts der Materialbahn auf mit einer Klemmeinrichtung zum Erfassen einer Kante der Materialbahn,
d) zum Abtrennen des Zuschnitts für die Zwischenlage ist ein Schneidaggregat vorgesehen.

In der Verpackungstechnik werden kleinere oder größere Gegenstände zum Transport auf Paletten gelagert. Die Gegenstände, insbesondere Kartons oder andere Verpackungen wie Dosen, Flaschen etc., werden lagenweise auf der Palette oder einer anderen Unterlage gestapelt. Zwischen den einzelnen Kartonlagen werden Zwischenlagen aus dünnem Material zur Sicherung und besseren Positionierung der Packungslagen eingebracht. Diese Zwischenlagen bestehen vorwiegend aus Papier oder dünnem Karton, können aber auch aus anderem flexiblen Material bestehen.

Bei einer bekannten Einrichtung werden Kartons durch einen bekannten Palettierer mit schwenkbarem Gelenkarm und Saugkopf auf einer Palette lagenweise gestapelt (DE-A-3720933.7). Die Zwischenlage wird bei diesem Vorschlag von einer Materialbahn abgetrennt. Die so gebildeten Zuschnitte werden von dem Palettierer bzw. dem Saugkopf desselben erfaßt und positionsgerecht auf dem (Teil-)Stapel auf der Palette abgelegt. Bei dieser Lösung hat demnach der Palettierer eine Doppelfunktion.

Eine gattungsgemäße Vorrichtung gemäß dem Oberbegriff des Anspruchs 1 ist aus der DE-OS 26 05 197 bekannt. Zusammen mit einem Gegenstände anhebenden Saugorgan wird eine Klemmeinrichtung bewegt, mit deren Hilfe die Materialbahn bis zur Durchführung eines Trennschnitts abziehbar ist.

Schließlich zeigt die US 4,944,503 eine Vorrichtung zur Bildung eines Stapels von Produkten mit jeweils vorgesehenen Zwischenlagen. Produkte und ZwischenJagen werden einzeln über Förderbänder dem Stapel zugeführt und unmittelbar durch die Bänder auf dem Stapel abgelegt.

Ausgehend von diesem Stand der Technik liegt der Erfindung die Aufgabe zugrunde, die Leistungsfähigkeit einer Anlage zum Stapeln von Gegenständen wie Kartons und anderen Verpackungen zu erhöhen.

Zur Lösung dieser Aufgabe ist das erfindungsgemäße Verfahren durch folgende Merkmale gekennzeichnet:
e) das Zwischenlagen-Aggregat arbeitet unabhängig von aber in Abstimmung mit dem Palettierer,
f) die Materialbahn ist auf einer horizontalen und eine geringere Breite als die Materialbahn aufweisenden Tischplatte ablegbar, außerdem ist die Zwischenlage auf der Tischplatte durch das Schneidaggregat von der Materialbahn abtrennbar,
g) die Klemmeinrichtung des Bahnförderers weist beidseitig neben der Tischplatte wirkende Klemmorgane bzw. Klemmbacken auf, durch die die Materialbahn im Bereich von Längsseiten bzw. von seitlichen Überständen erfaßbar ist.

Gemäß einem weiteren Merkmal der Erfindung ist das Zwischenlagen-Aggregat mit einem gesonderten Förderorgan (Zuschnittförderer) zum Aufnehmen des abgetrennten Zuschnitts, zum Weitertransport und Ablegen auf dem Stapel ausgerüstet.

Ein wichtiger Vorteil der Erfindung besteht darin, daß die Arbeitsschritte des Palettierers mit denjenigen des Zwischenlagen-Aggregats derart abgestimmt werden können, daß zeitliche Überlappungen gegeben sind. Der Palettierer kann beispielsweise einen Gegenstand für eine neue Lage bereits erfassen, während die Zwischenlage auf der komplettierten Packungslage positioniert wird. Auch die Arbeitsschritte des Zwischenlagen-Aggregats können einander teilweise überschneiden. Der Bahnförderer kann beispielsweise die Materialbahn bereits erfassen und einen Förderabschnitt weitertransportieren, während ein abgetrennter Zuschnitt durch den Zuschnittförderer auf dem Stapel abgelegt wird.

Weitere Merkmale der Erfindung betreffen die Ausbildung des Zwischenlagen-Aggregats, insbesondere der Förderer desselben und einer Trenneinrichtung zum Abtrennen der Zuschnitte von der Materialbahn.

Weitere Einzelheiten werden nachfolgend an einem Ausführungsbeispiel der erfindungsgemäßen Vorrichtung anhand der Zeichnungen erläutert. Es zeigt:
- Fig. 1: Eine Einrichtung zum Palettieren von Kartons in schematischer Seitenansicht,
- Fig. 2: einen Grundriß der Einrichtung gemäß Fig. 1 mit Palettierer und
- Fig. 3: Einzelheiten einer Trenneinrichtung als Detail des Zwischenlagen-Aggregats in einer Rückansicht der Fig. 1, teilweise im Vertikalschnitt, bei vergrößertem Maßstab.

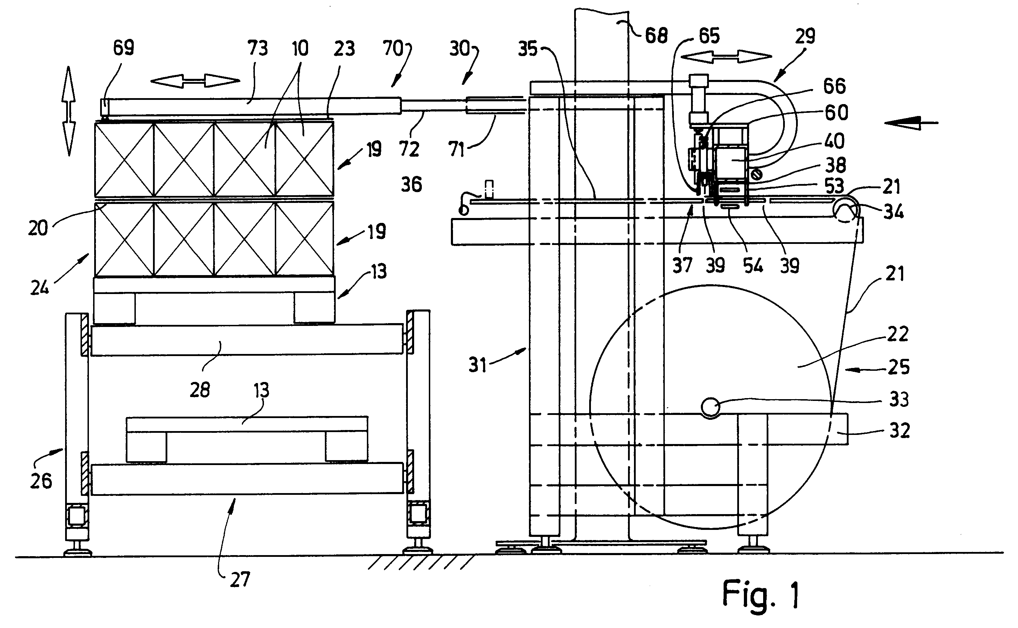

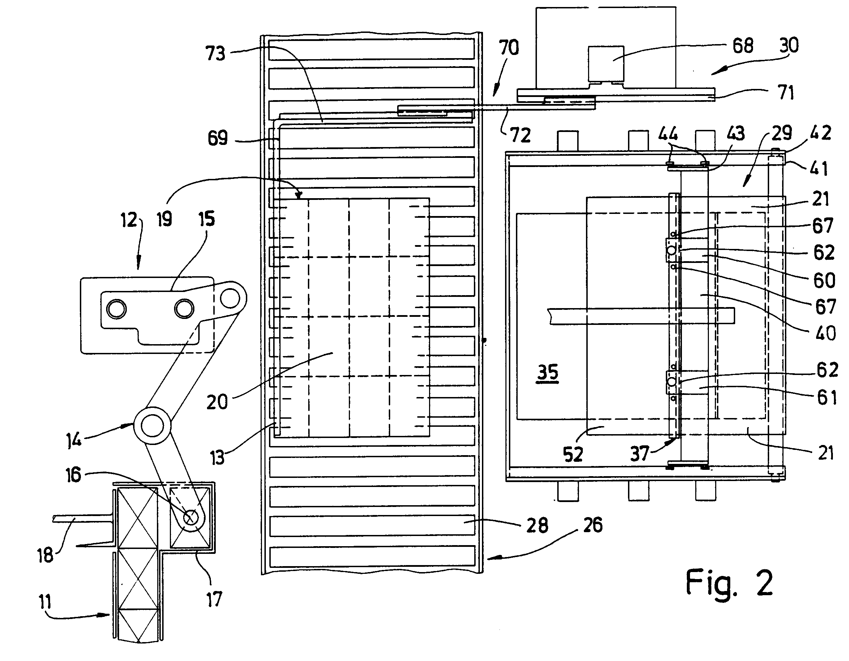

Die in Fig. 1 und Fig. 2 in ihrer Gesamtheit gezeigte Anlage dient zum Palettieren von quaderförmigen Gegenständen, nämlich Kartons 10. Diese kommen nacheinander auf einem Zuförderer 11 an. Ein Palettierer 12 erfaßt die einzelnen Kartons 10 und setzt sie auf einer Palette 13 ab.

Der Palettierer 12 ist in üblicher Weise als Roboter ausgebildet mit einem Gelenkarm 14, der schwenkbar sowie auf- und abbewegbar an einem Traggestell 15 gelagert ist. Am freien Ende des Gelenkarms 14 befindet sich ein Aufnahmeorgan für die Kartons 10, nämlich ein Saugkopf 16. Dieser erfaßt jeweils einen Karton 10 an der Oberseite durch Unterdruck. Bei dem vorliegenden Ausführungsbeispiel werden die Kartons 10 von einer Plattform 17 abgenommen, auf die die Kartons 10 nacheinander durch einen Schieber 18 gefördert werden.

Die Kartons 10 werden auf der Palette 13 lagenweise abgesetzt, nämlich unter Bildung von Kartonlagen 19. Jede Kartonlage 19 besteht aus mehreren Gegenständen, also Kartons 10.

Zwischen den übereinander angeordneten Karton lagen 19 befinden sich jeweils Zwischenlagen 20. Diese bestehen aus Papier oder aus einem anderen dünnen Material. Die Zwischenlage 20 deckt im vorliegenden Fall die Oberseite einer Kartonlage 19 vollständig ab.

Die Zwischenlagen 20 werden von einer Materialbahn 21 nacheinander abgetrennt. Diese wiederum wird von einer Bobine 22 abschnittweise abgezogen. Der Abzug bzw. Vorschub der Materialbahn 21, also ein Förder-Abschnitt derselben, entspricht der Abmessung einer Zwischenlage 20 in Längsrichtung der Materialbahn 21. Ein entsprechender Zuschnitt 23 wird von der Materialbahn 21 abgetrennt, der Palette 13 zugeführt und hier auf der jeweils oberen Kartonlage 19 eines (Teil-)Stapels 24 abgelegt.

Für die Herstellung und Handhabung des Zuschnitts 23 bzw. der Zwischenlage 20 ist ein gesondertes Aggregat, nämlich ein Zwischenlagen-Aggregat 25 vorgesehen. Dieses arbeitet unabhängig von, jedoch in Abstimmung mit dem Palettierer 12. Bei dem vorliegenden Ausführungsbeispiel ist das Zwischenlagen-Aggregat 25 mit Abstand von dem Palettierer 12 angeordnet, und zwar auf der gegenüberliegenden Seite zur Palette 13. Diese lagert beim gezeigten Ausführungsbeispiel auf einer Palettenbahn 26 die hier zwei Förderebenen aufweist. Auf einer unteren Transportbahn 27 werden die leeren Paletten 13 angeliefert. Im Bereich einer in den Zeichnungen nicht dargestellten Hubstation werden die leeren Paletten auf die Beladungsebene angehoben, die zugleich als Abförderer 28 für die beladenen Paletten 13 ausgebildet ist. Die Beladeebene für die Paletten 13 ist demnach erhöht.

Das Zwischenlagen-Aggregat 25 ist mit zwei Förderorganen ausgestattet, die jeweils eigenständige Förderaufgaben durchführen. Ein Bahnförderer 29 hat die Aufgabe, die Materialbahn 21 in Abschnitten - entsprechend der Größe eines Zuschnitts 23 - von der Bobine 22 abzuziehen. Ein gesonderter Zuschnittförderer 30 übernimmt den von der Materialbahn 21 abgetrennten Zuschnitt 23, fördert diesen zur Palette 13 und besorgt die Positionierung als Zwischenlage 20 auf der oberen Kartonlage 19.

Der Bahnförderer 29 gehört zu einem eigenständigen Aggregat mit einem Traggestell 31. Im unteren Bereich desselben ist die Bobine 22 drehbar auf Tragbalken 32 gelagert. Eine durch eine Mittenöffnung der Bobine 22 hindurchgeführte Stange 33 ruht mit den Enden auf den Tragbalken 32.

Die von der Bobine 22 abgezogene Materialbahn wird über eine Umlenkwalze 34 in eine erhöhte, horizontale Ebene umgelenkt. Hier wird ein Abschnitt der Materialbahn 21 auf einer Tischplatte 35 abgelegt. Ein vorderes, freies Ende der Materialbahn 21 wird durch ein unterhalb der Tischplatte gelagertes, bewegliches Klemmorgan, nämlich eine Klemmfeder 36 auf der Tischplatte 35 fixiert. In dieser Position wird ein Zuschnitt 23 im Bereich der Tischplatte 35 von der Materialbahn abgetrennt. Hierzu ist oberhalb der Tischplatte 35 ein Schneidaggregat 37 mit einem Schneidmesser 38 installiert. Die Tischplatte 35 ist zur Durchführung des Trennschnitts mit Schlitzen 39 versehen. Entsprechend den möglichen Abmessungen der Zuschnitte 23 sind mehrere Schlitze 39 in der Tischplatte 35 angeordnet.

Für den Transport der Materialbahn 21 ist in Höhe der Tischplatte 35 bzw. oberhalb derselben der Bahnförderer 29 hin- und herbewegbar. Eine sich quer zur Förderrichtung erstreckenden Traverse 40 ist mit Laufrollen auf bzw. an seitlichen Laufschienen 41 abgestützt. Die Laufschienen 41 sind mit seitlichen Tragorganen des Traggestells 31 verbunden, nämlich mit Tragwangen 42. Die Traverse 40 ist als etwa quadratisches Hohlprofil ausgebildet. Die Laufrollen sind an einer Endplatte 43 der Traverse 40 angebracht. Bei dem gezeigten Ausführungsbeispiel wird ein Laufrollenwagen gebildet, wobei je zwei Laufrollen 44 und 45 oberhalb und unterhalb der Laufschiene 41 bzw. eines quergerichteten Schenkels derselben abgestützt sind.

Die hin- und hergehende Bewegung der Traverse 40 oberhalb der Tischplatte 35 wird hier durch einen Druckmittelzylinder 46 bewirkt, der an einer Seite der Traverse 40, nämlich an einer Tragwange 42, unterhalb der Traverse 40 gelagert ist. Der Druckmittelzylinder 46 ist ohne Kolbenstange ausgebildet. Ein nach oben weisender, aus dem Zylinder heraustretender und mit dem Kolben bewegbarer Ansatz 47 ist mit dem Ende der Traverse 40 verbunden, und zwar über eine gabelförmige Verbindung mit einem Schenkel der Endplatte 43.

Um einen korrekten Lauf der langgestreckten Traverse 40 bei der einseitigen Antriebsbelastung durch den Druckmittelzylinder 46 zu gewährleisten, wird Antrieb auch auf die gegenüberliegende Seite der Traverse 40 übertragen. Zu diesem Zweck sind die an beiden Seiten sich in Förderrichtung erstreckenden Laufschienen 41 als Zahnstange ausgebildet mit einer Verzahnung 48 an der Unterseite. Mit der Verzahnung 48 ist ein Zahnrad 49 in Eingriff. Dieses ist über eine Welle 50 mit einem entsprechenden Zahnrad auf der gegenüberliegenden Seite verbunden. Die Welle 50 wiederum ist mit der Traverse 40, nämlich mit den Endplatten 43 derselben verbunden, nämlich beim vorliegenden Ausführungsbeispiel in der Endplatte 43 drehbar gelagert. Durch Abwälzen der Zahnräder 49 an beiden Enden der Welle 50 wird eine Übertragung der Antriebsbewegung auf beide Seiten der Traverse 40 erzielt.

Der Bahnförderer 29, nämlich die Traverse 40 desselben, ist mit Organen zum Erfassen der Materialbahn 21 versehen. Es handelt sich dabei um Klemmorgane 51 jeweils im Bereich seitlicher Längsränder der Materialbahn 21. Zum Erfassen derselben ist die Tischplatte 35 mit geringerer Breite ausgebildet als die Materialbahn 21. Im Bereich seitlicher Überstände 52 wird die Materialbahn 21 durch die Klemmorgane 51 erfaßt. Durch entsprechende Bewegung des Bahnförderers 29 bzw. der Traverse 40 wird sodann ein Abschnitt der Materialbahn 21 von der Bobine 22 abgezogen.

Jedes Klemmorgan 51 besteht aus zwei Klemmbacken 53, 54, jeweils oberhalb und unterhalb der Materialbahn 21. Zum Erfassen derselben werden die Klemmbacken 53, 54 auseinander, nämlich aufwärts bzw. abwärts bewegt. Zur Betätigung der Klemmbacken 53, 54 dient ein (Pneumatik-)Zylinder 55. Dessen Kolbenstange ist mit einem Betätigungsgestänge für die Klemmbacken 53, 54 verbunden, nämlich mit einem Parallelogrammgestänge, welches aus zwei parallelen Lenkern 56, 57 besteht. Diese sind mit einem mittigen Lager 58 an einem Steg 59 an der Unterseite der Traverse 40 schwenkbar gelagert. Durch Aufrichten der Lenker 56, 57 werden die Klemmbacken 53, 54 geöffnet. Durch entgegengesetzte Bewegung, nämlich durch Ausfahren der Kolbenstange des Zylinders 55, werden die Klemmbacken 53, 54 geschlossen. Der Zylinder 55 ist hier innerhalb der Traverse 40 gelagert und tritt über eine Ausnehmung in der Unterseite desselben nach außen.

Das Schneidaggregat 37 ist bei diesem Ausführungsbeispiel ebenfalls an der Traverse 40 angebracht, und zwar an der in Förderrichtung vorn liegenden Seite.

Bei dem vorliegenden Ausführungsbeispiel ist das Schneidaggregat 37 über zwei im Abstand voneinander angeordnete Tragschenkel 60, 61 mit der Oberseite der Traverse 40 verbunden. In den Tragschenkeln 60, 61 sind Betätigungszylinder 62 angeordnet. Durch diese wird das Schneidmesser 38 gehalten. Durch die Betätigungszylinder 62 wird das Schneidmesser 38 auf- und abbewegt. Zu diesem Zweck ist eine sägezahnförmig ausgebildete Messerklinge 63 an einem Tragbalken 64 angebracht. Dieser ist mit der Kolbenstange des Betätigungszylinders 62 verbunden. Der Tragbalken 64 ist in einer im Querschnitt U-förmigen Halterung 65 gelagert. Die Messerklinge 63 mit Tragbalken 64 ist innerhalb der nach unten offenen Halterung 65 auf- und abbewegbar.

Zur Durchführung eines Trennschnitts wird das Schneidaggregat 37 durch die Betätigungszylinder 62 abwärtsbewegt. Die mitbewegte Halterung 65 ist so bemessen, daß in der Ausgangsstellung und während der Abwärtsbewegung seitliche, nach unten gerichtete Schenkel des U-förmigen Profils über die Messerklinge 63 hinwegragen. Dadurch werden die Schenkell der Halterung 65 zuerst auf die Materialbahn 21 aufgesetzt. Bei weiterer Abwärtsbewegung wird die Messerklinge 63 - mit Tragbalken 64 - relativ zu der Halterung 65 weiter abwärts bewegt unter Durchführung des Trennschnitts. Diese Abwärtsbewegung der Messerklinge 63 erfolgt gegen die Rückholkraft von Federn 66, die an aufrechten Haltestangen 67 angebracht sind. Diese wiederum sind mit dem Tragbalken 64 verbunden und treten nach oben durch die Halterung 65 hindurch. Die Federn 66 stützen sich bei der Abwärtsbewegung der Messerklinge 63 mit Tragbalken 64 relativ zur Halterung 65 einerseits auf der Oberseite derselben und andererseits an einem Bund bzw. Vorsprung am Ende der Haltestangen 67 ab.

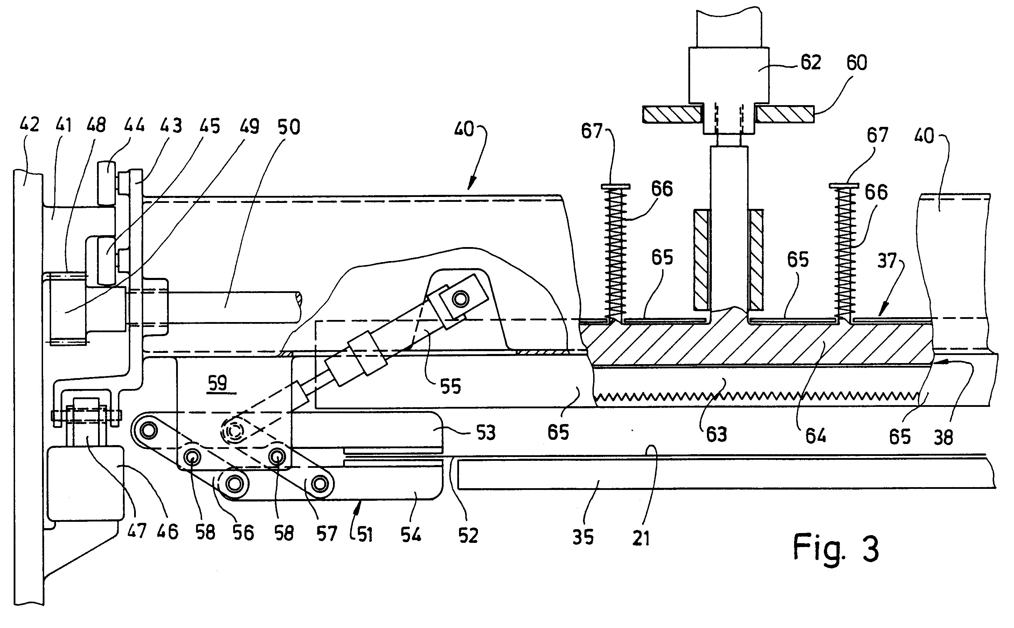

Nach Durchführung eines Trennschnitts wird das Schneidaggregat 37 durch den Betätigungszylinder 64 in eine obere Ausgangsstellung zurückgefahren. Dabei wird nach dem Abheben der Halterung 65 durch die Wirkung der Federn 66 die Messerklinge 63 nach oben in die Halterung 65 zurückgezogen. Danach wird die komplette Einheit weiter aufwärts bewegt in eine Position gemaß Fig. 1 und Fig. 3.

Der auf diese Weise abgetrennte Zuschnitt wird von dem Zuschnittförderer 30 erfaßt, von der Tischplatte 35 abgezogen und der Palette 13 zugeführt. Der Zuschnittförderer 30 ist als gesondertes Aggregat neben dem Bahnförderer 29 bzw. dem Traggestell 31 desselben angeordnet. Ein Traggestell für den Zuschnittförderer 30 besteht im wesentlichen aus einer aufrechten Tragsäule 68 mit einem Sockel. Die Tragsäule 68 steht seitlich neben dem Traggestell 31, mit Abstand von diesem.

Der Zuschnitt 23 ist von einem Förderarm 69 des Zuschnittförderers 30 erfaßbar. Dieser Förderarm 69 erstreckt sich quer zur Förderrichtung. An der Unterseite des Förderarms 69 sind Organe zum Erfassen des Zuschnitts 23 angeordnet, insbesondere Saugorgane. Diese nehmen einen in Bewegungsrichtung vornliegenden Randbereich des Zuschnitts 23 auf, nachdem zuvor die Klemmfeder 36 nach unten weggeschwenkt wurde. Der Förderarm 69 wird sodann mit dem Zuschnitt 23 in einer über lagerten Horizontal- und Vertikalbewegung zur Palette 13 bzw. zum (Teil-)Stapel 24 bewegt. Der Förderarm 69 wird dabei unter Mitnahme des Zuschnitts 23 über die jeweils obere Kartonlage 19 hinwegbewegt, wobei der lediglich an einem Rand gehaltene Zuschnitt 23 gegebenenfalls über eine Kante der Kartonlage 19 gezogen wird.

Der Förderarm 69 ist an einem teleskopartig ausgebildeten Tragarm 70 des Zuschnittförderers 30 angebracht. An der Tragsäule 68 befindet sich ein langgestrecktes, horizontal gerichtetes Tragstück 71 für den Tragarm 70. Das Tragstück 71 ist an der Tragsäule 68 auf- und abbewegbar. Der Tragarm 70 ist in einer entsprechenden Führung des Tragstücks 71 horizontal verfahrbar. Auf diese Weise ist eine (überlagerte) Vertikal- und Horizontalbewegung des Tragarms 70 durchführbar.

Der Tragarm 70 besteht aus einem an dem Tragstück 71 angebrachten Zwischenarm 72 und einem mit diesem und dem Förderarm 69 verbundenen weiteren, horizontalen Armstück 73. Letzteres ist teleskopartig, nämlich in Längsrichtung verschiebbar, mit dem Zwischenarm 72 verbunden. Auf diese Weise ist ein größerer Förderweg des Förderarms 69 möglich, nämlich durch Verschieben des Zwischenarms 72 am Tragstück 71 und durch Verschieben des Armstücks 73 relativ zum Zwischenarm 72.

Die Bewegungen der Organe sind so aufeinander abgestimmt, daß kurze Taktzeiten ermöglicht werden. Die Klemmorgane 51 sind in Förderrichtung hinter dem Schneidaggregat 37 angeordnet. Während des Trennschnitts kann deshalb das nach dem Trennschnitt vordere Ende der Materialbahn 21 bereits wieder durch die Klemmorgane 51 erfaßt werden. Der Abzug der Materialbahn 21 kann deshalb unmittelbar nach Beendigung des Trennschnitts eingeleitet werden. Gleichzeitig wird der Transport des Zuschnitts 23 durch den gesonderten Zuschnittförderer 30 zur Palette 13 ausgeführt. Gleichzeitig und unabhängig hiervon arbeitet der Palettierer 12.

## Patentansprüche

1. Vorrichtung zum Herstellen von dünnen Zwischenlagen (20) durch Abtrennen eines Zuschnitts (23) von einer Materialbahn (21) und Zuführen desselben zu einer Palette (13) bzw. einem auf dieser gebildeten (Teil-)Stapel (24) von Kartons (10) oder anderen Gegenständen sowie zum Ablegen des Zuschnitts (23) als Zwischenlage (20) auf einer Kartonlage (19) mit folgenden Merkmalen:
a) zum Beladen der Palette ist ein Palettierer (12) vorgesehen,
b) zum Abziehen eines Abschnitts der Materialbahn (21) von einer Bobine (22) und zum Zuführen eines abgetrennten Zuschnitts (23) und Ablegen auf dem (Teil-)Stapel (24) als Zwischenlage (20) ist ein Zwischenlagen-Aggregat (25) vorgesehen,
c) das Zwischenlagen-Aggregat (25) weist einen Bahnförderer (29) zum Transport eines dem Zuschnitt (23) entsprechenden Abschnitts der Materialbahn (21) auf mit einer Klemmeinrichtung zum Erfassen einer Kante der Materialbahn (21),
d) zum Abtrennen des Zuschnitts (23) für die Zwischenlage (20) ist ein Schneidaggregat (37) vorgesehen,
**gekennzeichnet durch** folgende Merkmale:
e) das Zwischenlagen-Aggregat (25) arbeitet unabhängig von aber in Abstimmung mit dem Palettierer (12),
f) die Materialbahn (21) ist auf einer horizontalen und eine geringere Breite als die Materialbahn (21) aufweisenden Tischplatte (35) ablegbar, außerdem ist die Zwischenlage (20) auf der Tischplatte (35) durch das Schneidaggregat (37) von der Materialbahn (21) abtrennbar,
g) die Klemmeinrichtung des Bahnförderers (29) weist beidseitig neben der Tischplatte (35) wirkende Klemmorgane bzw. Klemmbacken (53, 54) auf, durch die die Materialbahn (21) im Bereich von Längsseiten bzw. von seitlichen Überständen (52) erfaßbar ist.

2. Vorrichtung nach Anspruch 1, dadurch gekennzeichnet, daß das Zwischenlagen-Aggregat (25) einen gesonderten Zuschnittförderer (30) zum Aufnehmen des abgetrennten Zuschnitts (23) und zum Transport desselben sowie zum Ablegen auf dem (Teil-)Stapel (24) aufweist.

3. Vorrichtung nach Anspruch 1 oder 2, dadurch gekennzeichnet, daß die Tischplatte (35) im Bereich des durchzuführenden Trennschnitts einen Schlitz (39) für den Durchtritt eines Trennorgans, insbesondere eines Schneidmessers (38) bzw. einer Messerklinge (63), aufweist.

4. Vorrichtung nach Anspruch 1 oder einem der weiteren Ansprüche, dadurch gekennzeichnet, daß das Schneidaggregat (37) eine Halterung (65) zum Fixieren der Materialbahn (21) und des Zuschnitts (23) auf der Tischplatte (35) während des Schneidvorgangs aufweist, insbesondere eine relativ zur Messerklinge (63) auf- und abbewegbare U-förmige Halterung (65), deren nach unten gerichtete Schenkel auf die Materialbahn aufdrückbar sind.

5. Vorrichtung nach Anspruch 1 oder einem der weiteren Ansprüche, dadurch gekennzeichnet, daß der Bahnförderer (29) oberhalb der Materialbahn (21) hin- und herbewegbar und zu diesem Zweck seitlich neben der Materialbahn (21) mit Laufrollen (44, 45) auf Laufschienen (41) eines Traggestells (31) abgestützt ist.

6. Vorrichtung nach Anspruch 1 oder einem der weiteren Ansprüche, dadurch gekennzeichnet, daß der Bahnförderer (29) eine sich quer zur Materialbahn (21) erstreckende Traverse (40) aufweist, an deren Enden Laufrollen (44, 45) zur Abstützung angebracht sind, wobei die Klemmorgane (Klemmbacken 53, 54) zum Erfassen der Materialbahn (21) an der Traverse (40), insbesondere an der Unterseite, angebracht sind.

7. Vorrichtung nach Anspruch 1 oder einem der weiteren Ansprüche, dadurch gekennzeichnet, daß die Klemmbacken (53, 54) relativ zueinander auf- und abbewegbar und durch einen Zylinder (55) über ein Gestänge betätigbar sind, insbesondere über ein mittig ortsfest gelagertes Parallelogrammgestänge mit parallelen Lenkern (56, 57).

8. Vorrichtung nach Anspruch 5 sowie einem der weiteren Ansprüche, dadurch gekennzeichnet, daß der Bahnförderer (29) bzw. dessen Traverse (40) durch einen seitlich gelagerten Druckmittelzylinder (46) hin- und herbewegbar ist, wobei der Antrieb des Druckmittelzylinders (46) über eine getriebliche Verbindung (Verzahnung 48, Zahnrad 49, Welle 50) auf beide Seiten des Bahnförderers (29) übertragbar ist.

9. Vorrichtung nach Anspruch 6 oder einem der weiteren Ansprüche, dadurch gekennzeichnet, daß das Schneidaggregat (37) als Teil des Zwischenlagen-Aggregats (25) an der Traverse (40) angebracht ist, insbesondere im Bereich einer in Förderrichtung der Materialbahn (21) vorn liegenden Seite derselben, und daß die Organe zum Erfassen der Materialbahn (21) (Klemmbacken 53, 54) in einem in Förderrichtung der Materialbahn (21) rückwärtigen Bereich der Traverse (40) angebracht sind.

10. Vorrichtung nach Anspruch 2 oder einem der weiteren Ansprüche, dadurch gekennzeichnet, daß der Zuschnittförderer (30) neben dem Bahnförderer (29) an einem gesonderten Traggestell insbesondere an einer Tragsäule (68), auf- und abbewegbar sowie in Förderrichtung des Zuschnitts (23) hin- und herbewegbar angeordnet ist.

11. Vorrichtung nach Anspruch 2 oder einem der weiteren Ansprüche, dadurch gekennzeichnet, daß der Zuschnittförderer (30) einen sich quer zur Förderrichtung des Zuschnitts (23) erstreckenden Förderarm (69) zum Erfassen eines in Transportrichtung vorn liegenden (Rand-)Bereichs des Zuschnitts (23) aufweist, insbesondere mit an der Unterseite angeordneten Saugorganen.

12. Vorrichtung nach Anspruch 11, dadurch gekennzeichnet, daß der Förderarm (69) auf- und abbewegbar sowie in Förderrichtung des Zuschnitts (23) hin- und herbewegbar ist, insbesondere durch einen mit dem Traggestell (Tragsäule 68) verbundenen teleskopartig bewegbaren Tragarm (70).

13. Vorrichtung nach Anspruch 1 oder einem der weiteren Ansprüche, dadurch gekennzeichnet, daß die Klemmbacken (37) die seitlichen Überstände (52) der Materialbahn (21) im Bereich des Schneidaggregats (37) vorzugsweise während des Trennschnitts erfassen und insbesondere in Förderrichtung hinter dem Schneidaggregat angeordnet sind.

## Claims

1. Apparatus for producing thin separator sheets (20) by severing a blank (23) from a material web (21) and feeding said blank to a pallet (13) or a (partial) stack (24) of cartons (10) or other article which is formed on said pallets, and for depositing the blank (23), as separator sheet (20), on a layer of cartons (19), having the following features:
a) a palletizer (12) is provided for loading the pallet,
b) a separator-sheet unit (25) is provided for drawing a section of the material web (21) off from a reel (22) and for feeding a severed blank (23) and depositing the latter, as separator sheet (20), on the (partial) stack (24),
c) the separator-sheet unit (25) exhibits a web conveyor (29) for transporting a section, corresponding to the blank (23), of the material web (21), having a clamping device for seizing an edge of the material web (21),
d) a cutting unit (27) is provided for severing the blank (23) for the separator sheet (20),
characterized by the following features:
e) the separator-sheet unit (25) operates independently of, but in coordination with, the palletizer (12),
f) the material web (21) can be deposited on a horizontal table board (35), which is of a smaller width than the material web (21), and moreover the separator sheet (20) can be severed from the material web (21) on the table board (35) by the cutting unit (37),
g) the clamping device of the web conveyor (29) exhibits clamping members or clamping jaws (53, 54) which act on both sides next to the table board (35) and by means of which the material web (21) can be seized in the region of longitudinal sides and/or lateral projecting portions (52).

2. Apparatus according to Claim 1, characterized in that the separator-sheet unit (25) exhibits a separate blank conveyor (30) for receiving the severed blank (23) and for transporting the same and for depositing it on the (partial) stack (24).

3. Apparatus according to Claim 1 or 2, characterized in that, in the region of the severing cut which is to be carried out, the table board (35) exhibits a slit (39) for the through-passage of a severing member, in particular of a cutter (38) and/or a cutter blade (63).

4. Apparatus according to Claim 1 or one of the further claims, characterized in that the cutting unit (37) exhibits a securing means (65) for fixing the material web (21) and the blank (23) on the table board (35) during the cutting operation, in particular a U-shaped securing means (65) which can be moved up and down relative to the cutter blade (63) and whose downwardly directed legs can be pressed onto the material web.

5. Apparatus according to Claim 1 or one of the further claims, characterized in that the web conveyor (29) can be moved back and forth above the material web (21) and, for this purpose, is supported, laterally next to the material web (21), by rollers (44, 45) on running rails (41) of a carrying framework (31).

6. Apparatus according to Claim 1 or one of the further claims, characterized in that the web conveyor (29) exhibits a crossmember (40) which extends transversely with respect to the material web (21) and at the ends of which rollers (44, 45) are fitted for supporting purposes, the clamping members (clamping jaws 53, 54) for seizing the material web (21) being fitted on the crossmember (40), in particular on the underside.

7. Apparatus according to Claim 1 or one of the further claims, characterized in that the clamping jaws (53, 54) can be moved up and down relative to one another and can be actuated by a cylinder (55) via a linkage, in particular via a parallelogram linkage which is mounted centrally in a stationary manner and has parallel links (56, 57).

8. Apparatus according to Claim 5 and one of the further claims, characterized in that the web conveyor (29) and/or the crossmember (40) thereof can be moved back and forth by a laterally mounted pressure-medium cylinder (46), it being possible for the drive action of the pressure-medium cylinder (46) to be transmitted to both sides of the web conveyor (29) via a gear-type connection (toothing arrangement 48, gear wheel 49, shaft 50).

9. Apparatus according to Claim 6 or one of the further claims, characterized in that the cutting unit (37), as part of the separator-sheet unit (25), is fitted on the crossmember (40), in particular in the region of a side thereof which is located at the front in the conveying direction of the material web (21), and in that the members for seizing the material web (21) (clamping jaws 53, 54) are fitted in that region of the crossmember (40) which is at the rear in the conveying direction of the material web (21).

10. Apparatus according to Claim 2 or one of the further claims, characterized in that the blank conveyor (30) is arranged next to the web conveyor (29) on a separate carrying framework, in particular on a carrying column (68), the blank conveyor being arranged such that it can be moved up and down and such that it can be moved back and forth in the conveying direction of the blank (23).

11. Apparatus according to Claim 2 or one of the further claims, characterized in that the blank conveyor (30) exhibits a conveying arm (69) which extends transversely with respect to the conveying direction of the blank (23) and is intended for seizing a front (border) region, as seen in the transporting direction, of the blank (23), in particular with suction members arranged on the underside.

12. Apparatus according to Claim 11, characterized in that the conveying arm (69) can be moved up and down and can be moved back and forth in the conveying direction of the blank (23), and in particular by the telescopically movable carrying arm (70) which is connected to the carrying framework (carrying column 68).

13. Apparatus according to Claim 1 or one of the further claims, characterized in that the clamping jaws (53, 54) seize the lateral projecting portions (52) of the material web (21) in the region of the cutting unit (37), preferably during the severing cut, and are arranged, in particular, downstream of the cutting unit, as seen in the conveying direction.

## Revendications

1. Dispositif pour la production de couches intermédiaires minces (20) par détachement d'un flan (23) d'une bande de matériau (21) et amenée de celui-ci à une palette (13) ou à une pile (partielle) (24) de cartons (10) ou d'autres objets formée sur cette palette, et pour la pose du flan (23) comme couche intermédiaire (20) sur une couche (19) de cartons, ayant les caractéristiques suivantes :
a) pour le chargement de la palette est prévu un palettiseur (12),
b) pour l'enlèvement d'un morceau de la bande de matériau (21) d'une bobine (22) et pour l'amenée d'un flan détaché (23) et la pose de celui-ci comme couche intermédiaire (20) sur la pile (partielle) (24) est prévu un groupe à couches intermédiaires (25),
c) ce groupe à couches intermédiaires (25) présente un transporteur de bande (29) pour le transport d'un morceau de la bande de matériau (21) correspondant au flan (23) qui comporte un dispositif de serrage pour la saisie d'un bord de la bande de matériau (21),
d) pour le détachement du flan (23) pour la couche intermédiaire (20) est prévu un groupe de coupe (27),
caractérisé par les caractéristiques suivantes :
e) le groupe à couches intermédiaires (25) fonctionne indépendamment du palettiseur (12), mais en accord avec celui-ci,
f) la bande de matériau (21) peut être posée sur une table (35) horizontale et de largeur inférieure à celle de la bande de matériau (21) et, en outre, la couche intermédiaire (20) peut être détachée de la bande de matériau (21) sur la table (35) par le groupe de coupe (37),
g) te dispositif de serrage du transporteur de bande (29) présente des organes de serrage ou mâchoires (53, 54) agissant des deux côtés près de la table (35) qui peuvent saisir la bande de matériau (21) dans la zone de côtés longitudinaux ou de parties dépassantes latérales (52).

2. Dispositif selon la revendication 1, caractérisé par le fait que le groupe à couches intermédiaires (25) présente un transporteur de flans séparé (30) destiné à recevoir le flan détaché (23), le transporter et le poser sur la pile (partielle) (24).

3. Dispositif selon l'une des revendications 1 et 2, caractérisé par le fait que la table (35) présente dans la zone de la coupe à exécuter une fente (39) pour le passage d'un organe de séparation, en particulier d'un couteau (38) ou d'une lame de couteau (63).

4. Dispositif selon la revendication 1 ou une des autres revendications, caractérisé par le fait que le groupe de coupe (37) présente un dispositif de maintien pour fixer la bande de matériau et le flan (23) sur la table (35) pendant la coupe, en particulier un support en U (65) pouvant monter et descendre par rapport à la lame de couteau (63) et dont l'aile dirigée vers le bas peut être serrée sur la bande de matériau.

5. Dispositif selon la revendication 1 ou une des autres revendications, caractérisé par le fait que le transporteur de bande (29) peut aller et venir au-dessus de la bande de matériau (21) et s'appuie pour cela latéralement près de la bande de matériau (21), par des roulettes (44, 45), sur des rails (41) d'un bâti support (31).

6. Dispositif selon la revendication 1 ou une des autres revendications, caractérisé par le fait que le transporteur de bande (29) présente une traverse (40) s'étendant perpendiculairement à la bande de matériau (21) et aux extrémités de laquelle sont montées des roulettes d'appui (44, 45), les organes de serrage (mâchoires 53, 54) pour la saisie de la bande de matériau (21) étant montées sur cette traverse (40), en particulier sur le dessous.

7. Dispositif selon la revendication 1 ou une des autres revendications, caractérisé par le fait que les mâchoires (53, 54) peuvent monter et descendre l'une par rapport à l'autre et être actionnées par un vérin (55) par l'intermédiaire d'une tringlerie, en particulier par l'intermédiaire d'une tringlerie en parallélogramme à barres parallèles (56, 57) montée fixe au milieu.

8. Dispositif selon la revendication 5 et une des autres revendications, caractérisé par le fait que le transporteur de bande (29) ou sa traverse (40) peut aller et venir au moyen d'un vérin à fluide sous pression (46) monté latéralement, le mouvement de ce vérin (46) pouvant être transmis aux deux côtés du transporteur de bande (29) par un mécanisme (denture 48, roue dentée 49, arbre 50).

9. Dispositif selon la revendication 6 ou une des autres revendications, caractérisé par le fait que le groupe de coupe (37) est monté comme partie du groupe à couches intermédiaires (25) sur la traverse (40), en particulier dans la zone d'un côté avant, dans la direction de transport de la bande de matériau (21), de celle-ci, et que les organes de saisie de la bande de matériau (21) (mâchoires 53, 54) sont montés dans une zone arrière, dans la direction de transport de la bande de matériau (21), de la traverse (40).

10. Dispositif selon la revendication 2 ou une des autres revendications, caractérisé par le fait que le transporteur de flans (30) est monté près du transporteur de bande (29) sur un bâti support séparé, en particulier sur une colonne support (68), de façon à pouvoir monter et descendre et aller et venir dans la direction de transport du flan (23).

11. Dispositif selon la revendication 2 ou une des autres revendications, caractérisé par le fait que le transporteur de flans (30) présente un bras transporteur (69) s'étendant perpendiculairement à la direction de transporteur du flan (23) et destiné à saisir une zone (de bord) du flan (23) située en avant dans la direction de transport, en particulier par des organes d'aspiration placés sur le dessous.

12. Dispositif selon la revendication 11, caractérisé par le fait que le bras transporteur (69) peut monter et descendre et aller et venir dans la direction de transport du flan (23), en particulier au moyen d'un bras support (70) mobile télescopiquement lié au bâti support (colonne support 68).

13. Dispositif selon la revendication 1 ou une des autres revendications, caractérisé par le fait que les mâchoires (37) saisissent les parties dépassantes latérales (52) de la bande de matériau (21) dans la zone du groupe de coupe (37) de préférence pendant la coupe et sont placées en particulier après le groupe de coupe dans la direction de transport.
